# NEUE EUROPÄISCHE PATENTSCHRIFT

(11) **EP 0 582 954 B2**
(45) Veröffentlichungstag und Bekanntmachung des Hinweises auf die Entscheidung über den Einspruch: **31.03.1999**
(45) Hinweis auf die Patenterteilung: 03.01.1996
(21) Anmeldenummer: 93112473.9
(22) Anmeldetag: 04.08.1993
(51) Int. Cl.: H02G 3/00

(54) **Verdrahtung in Kabelkanälen**
Wiring in cable ducts
Câblage en conduits de câble

(30) Priorität: 08.08.1992 DE 9210604 U
(43) Veröffentlichungstag der Anmeldung: 16.02.1994
(73) Patentinhaber: Tehalit GmbH, D-67716 Heltersberg (DE)
(72) Erfinder: Pollak, Gottfried, Dipl.-Ing. FH, D-67714 Waldfischbach-Burgalben (DE); Scherer, Peter, Dipl.-Ing. FH, D-66287 Quierschied (DE)
(74) Vertreter: Patentanwälte Möll und Bitterich

(56) Entgegenhaltungen:
- EP-A- 0 119 187
- FR-A- 2 311 433
- KB Elsystem Katalog 1988-06
- Brochure "Världsnyhet kb system" 1987
- Brochure " KB Elsytem is the easy way to save money"
- Brochure "Alumiininen johtokanavajärjestelmä XTB", Nokia Kaapeli, 1983

## Beschreibung

Die Erfindung betrifft Verdrahtungen in Elektro-Installationskanal- und Verdrahtungskanal-Systemen, wie sie seit Jahrzehnten zur flexiblen und gleichzeitig formschönen Versorgung von Wohn- und Büroräumen mit elektrischer Energie eingesetzt werden.

Die herkömmliche Elektro-Installation von Wohnund Bürogebäuden verwendet Hauptverteiler, Stockwerksverteiler, Wandverteiler und Deckenverteiler, jeweils verbunden durch elektrische Leitungen in der erforderlichen Zahl und Stärke. An zentraler Stelle sind die Verbrauchsmeßgeräte und Sicherungen untergebracht. Alle in der betreffenden Wohn- oder Büroeinheit installierte Verbraucher und Elektro-Installationsgeräte-Steckdosen, Schalter, Leuchtmittel usw. - werden untereinander und mit dem zentralen Anschlußkasten verdrahtet.

In Kabelkanälen werden die Stromkreise als dreiadrige Leitungen ausgeführt. Je nach der Anzahl der Leitungen werden kleinere oder größere Kabelkanäle verlegt. Man vergleiche die Firmendruckschrift "ALUMIININEN JOHTOKANAVAJÄRJESTELMÄ XTB" NOKIA Kaapeli 1983. Bei dieser Verdrahtungsart summieren sich die Kabellängen der einzelnen Stromkreise zu einer erheblichen Gesamtlänge, was mit entsprechenden Material- und Verlegungskosten verbunden ist. Der wesentliche Nachteil dieser üblichen Vorgehensweise liegt jedoch darin, daß mit zunehmender Anzahl von Leitungen im Kabelkanal deren maximal zulässige Strombelastung reduziert werden muß. Während eine einzige Leitung in einem Kabelkanal zu 100 % belastet werden darf, geht bei gleichzeitiger Anwesenheit von 9 Leitungen die zulässige Belastbarkeit jeder Leitung auf 50 % zurück (man vergleiche hierzu beispielsweise DIN VDE 0298, Teil 4). Der Grund für die Stromdreduktion ist. die unvermeidbare Erwärmung der gebündelten Leitungen bei Stromfluß, die zum Verformen der oft aus Kunststoff bestehenden Kabelkanäle, zum vorzeitigen Altern der Leitungsisolierungen und bis zu Leitungsbränden führen kann.

Es wurde bereits versucht, dies dadurch auszugleichen, daß der stromführende Querschnitt der einzelnen Leitungen dicker gewählt wurde, beispielsweise statt normal 1,5 mm² jetzt 2,5 mm² oder gar 4 mm². Dabei stößt man jedoch sehr schnell an mehrere Grenzen. Die eine Grenze ist. darin zu sehen, daß der Kabelkanal um so schneller voll ist, je dicker die Leitungen sind. Des weiteren ist. die Verlegung von Leitungen mit großen Drahtquerschnitten zeitaufwendiger und teurer. Schließlich ergibt sich eine Begrenzung dadurch, daß an herkömmlichen Steckdosen Drähte mit einem Querschnitt von > 2,5 mm² nicht angeklemmt werden können, weil die Klemmschrauben hierfür nicht vorgesehen sind.

Aus den Firmendruckschriften "KB Elsystem Katalog 1988-06" und "VÄRLDSNYHET-kb system" 1987 der Firma AB KONSTRUKTIONS-BAKELIT ist ein Stromschienen-Kanal bekannt, der mit sieben Speiseschienen ausgerüstet ist, die ein Drehstrom-System mit 63A und 380V bilden. Das kb-System umfaßt Steckdosen-Einheiten für Wechselstrom und für Drehstrom, in die jeweils eine automatische Sicherung integriert ist. Die Steckdosen-Einheiten sitzen auf dem kb-Kanal.

Beim KB System ist vorgesehen, daß von dem Stromschienenkanal über T-Verteilungen, zur Bildung von Drehstrom-Stichleitungen, identische Stromschienenkanäle seitlich abzweigen.

Der vorliegenden Erfindung liegt daher die Aufgabe zugrunde, eine Verdrahtung in Kabelkanälen anzugeben, mit deren Hilfe es möglich wird, mehr Strom durch den Kabelkanal an die Verbraucher und Elektro-Installationsgeräte zu leiten, wobei gleichzeitig der Gesamtaufwand erheblich reduziert wird.

Diese Aufgabe wird gelöst durch eine Verdrahtung mit den Merkmalen gemäß Kennzeichen des Anspruchs 1.

Ein erster Vorteil der erfindungsgemäßen Verdrahtung ist. in der Verwendung von ausreichend dimensionierten Drehstrom-Leitungen begründet. Dies bietet die Möglichkeit, in einer fünfadrigen Leitung sozusagen drei Zweiphasen-Wechselstromsysteme unterzubringen, ohne den für drei Wechselstromleitungen vorgeschriebenen Strom-Reduktionsfaktor voll ansetzen zu müssen.

Ein weiterer Vorteil der erfindungsgemäßen Verdrahtung ist. in der Verwendung von Sicherungseinheiten, vorzugsweise in Form von Drehstrom-Sicherungseinheiten, begründet, die jeweils an geeigneten Stellen im Kabelkanal positioniert sind. Die Drehstrom-Speiseleitung bildet sozusagen einen Energiebus, von dem kurze Drehstromstichleitungen zu den Sicherungseinheiten abzweigen.

Der dritte Vorteil der erfindungsgemäßen Verdrahtung ist darin begründet. daß hinter den Einbausicherungseinheiten das Drehstromsystem weitergeführt wird. Die sogenannte Drehstrom-Versorgungsleitung bildet ebenfalls einen Energiebus. wenn auch mit entsprechend reduzierter Strombelastbarkeit und dementsprechend reduziertem Adernquerschnitt. Dadurch bleibt der günstigere Strom-Reduktionsfaktor für Drehstromsysteme auch hier gültig. Die Aufteilung des Drehstromsystems auf die Üblichen Zweiphasen-Wechselstrom-Elektro-lnstallationsgeräte und -Verbraucher erfolgt mit Hilfe von abzweigenden Wechselstrom-Stichleitungen Sollten Drehstrom-Verbraucher bzw. -Elektro-lnstallationsgeräte vorgesehen sein, werden sie über Drehstrom-Stichleitungen versorgt.

Der wesentliche Vorteil der erfindungsgemäßen gegenüber der herkömmlichen Verdrahtung in Kabelkanälen liegt darin, daß bei vorschriftsmäßiger Anordnung der Abzweigungen, Sicherungseinheiten und Elektro-Installationsgeräte bzw. Verbraucher die Verlustleistung minimal ist. Der Kabelkanal und die in ihm verlegten elektrischen Leitungen sind somit nur minimal thermisch belastet.

Vorteilhafte Weiterbildungen der Erfindung betreffen die verschiedenen Leitungen. Diese können als Rundkabel, Flachkabel oder Stromschienensystem ausgebildet sein. Rundkabel haben den Vorteil der besonderen Preiswürdigkeit, auch lassen sie sich besonders leicht verlegen. Flachkabel dagegen können mit speziellen Klemmeinheiten ohne Abisolierung an jeder beliebigen Stelle kontaktiert werden.

Andere Ausgestaltungen der Erfindung, wie sie in den Unteransprüchen aufgeführt sind, betreffen die diversen Klemmeinheiten, Stichleitungen und Sicherungseinheiten bzw. die Verbraucher und Elektro-Installationsgeräte. So kann man beispielsweise eine Speiseleitungsklemmeinheit, eine Sicherungseinheit sowie die beide verbindende Drehstrom-Stichleitung einstückig ausbilden. Entsprechendes gilt auch für die Verbraucher und Elektro-Installationsgeräte, die mit einer Versorgungsleitungsklemmeinheit und der zugehörigen Stichleitung eine Einheit bilden können.

Anhand der Zeichnung soll die Erfindung in Form von Ausführungsbeispielen und Diagrammen näher erläutert werden. Es zeigen jeweils in schematischer Darstellung:
- Fig. 1: eine gegenüber dem Stand der Technik verbesserte Verdrahtung in Kabelkanälen unter Verwendung eines Drehstromsystems,
- Fig. 2: eine erste Ausführungsform einer Verdrahtung in Kabelkanälen nach der Erfindung,
- Fig. 3: eine zweite Ausführungsform einer Verdrahtung in Kabelkanälen nach der Erfindung.
- Fig. 4: eine Verdrahtung in Kabelkanälen nach dem Stand der Technik,
- Fig. 5: ein Diagramm, in dem die prozentualen Materialkosten der Kabelkanalverdrahtungen nach den Fig. 1 bis 4 eingetragen sind,
- Fig. 6: ein Diagramm, in dem der prozentuale Zeitaufwand für die Installierung der Verdrahtungen nach den Fig. 1 bis 4 eingetragen ist und
- Fig. 7: ein Diagramm, in dem prozentual der durch den Verbraucher oder an den Elektro-Installationsgeräten eines Kabelkanals maximal abnehmbare Strom der Verdrahtungen nach den Fig. 1 bis 4 eingetragen ist.

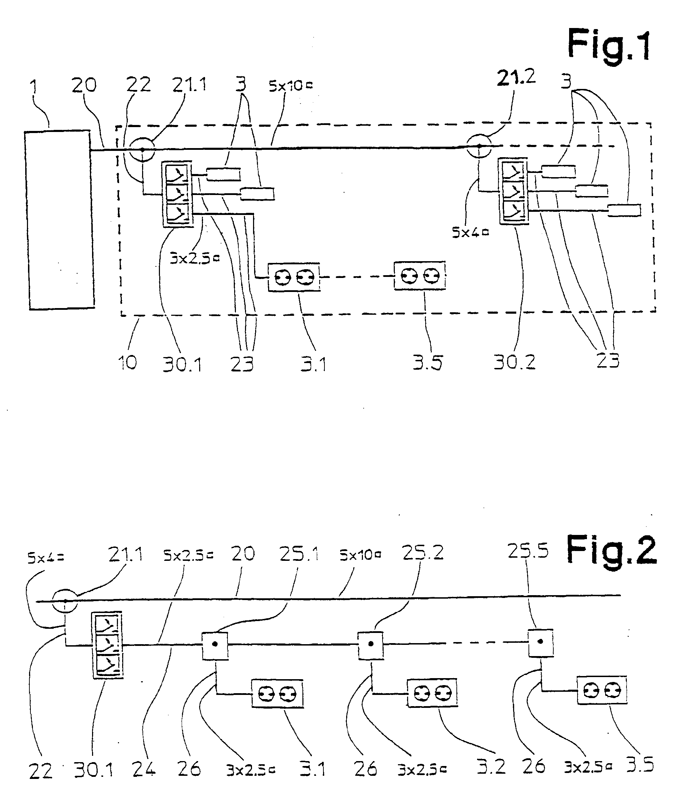

Die Fig 1 bis 4 zeigen unterschiedliche Arten von Verdrahtungen in Kabelkanälen, wobei jeweils identische Verhältnisse vorausgesetzt werden bezüglich des Abstandes zwischen dem zentralen Stromverteiler und der zu versorgenden Wohnungs- bzw. Büroeinheit, bezüglich der Länge des Kabelkanals und bezüglich der Anzahl und Dichte der Verbraucher oder Elektroinstallationsgeräte, beispielsweise Steckdosen, im Kabelkanal.

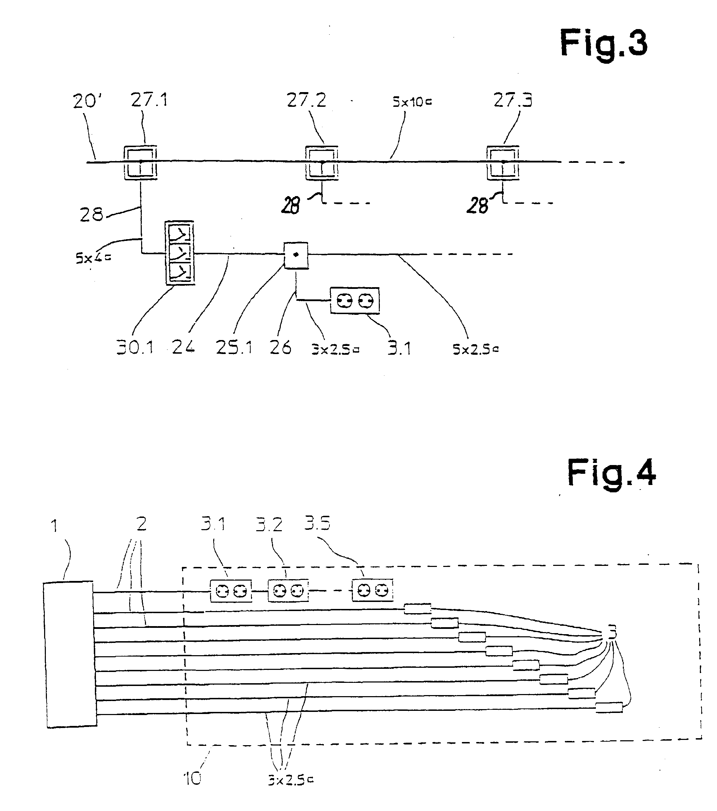

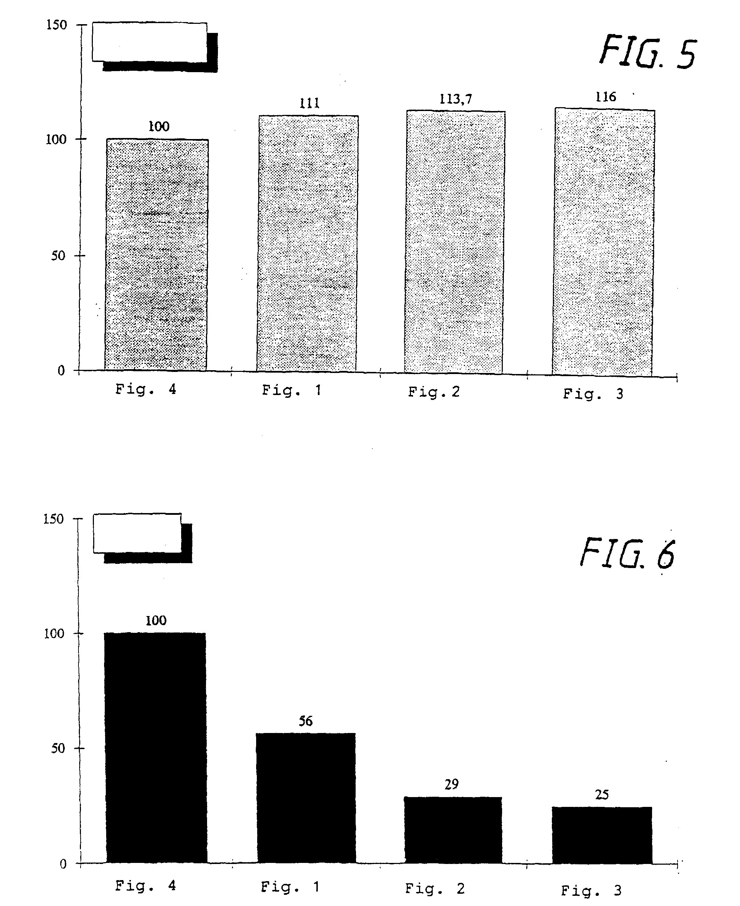

Fig. 4 zeigt ein Beispiel für eine herkömmliche Verdrahtung. Von einem zentralen Verteilerkasten 1 sind neun Leitungen 2 entsprechend neun Stromkreisen in einem Kabelkanal 10 verlegt. An jeder Leitung 2 sind elektrische Installationsgeräte oder Verbraucher 3 angeschlossen. Die in allen Figuren dargestellten Doppelsteckdosen 3.1, 3.2 ... 3.5 sind nur als Symbol für Elektro-Installationsgeräte oder Verbraucher zu verstehen. Die Längen der neun Leitungen 2 sind so gestaffelt, daß das erste an die zweite Leitung 2 angeschlossene Installationsgerät oder Verbraucher hinter dem letzten Installationsgerät oder Verbraucher 3.5 der ersten Leitung sitzt usw. Jede Leitung 2 besitzt drei Adern mit einem Querschnitt von 2,5 mm². Infolge des Reduktionsfaktors entsprechend neun Leitungen 2 im Kabelkanal 10 darf jede einzelne Leitung 2 statt mit 21 A nur mit maximal 10,5 A belastet werden. Alle Leitungen 2 sind als Rundkabel ausgeführt.

Fig. 1 zeigt eine erste Verbesserung. Von dem zentralen Verteilerkasten 1 ist. eine einzige Drehstrom-Speiseleitung 20 durch den gesamten Kabelkanal 10 verlegt. Auf der Drehstrom-Speiseleitung 20 sitzen Speiseleitungsklemmeinheiten 21.1, 21.2, von denen Drehstrom-Stichleitungen 22 mit fünf Adern von z. B. 4 mm² Querschnitt abzweigen und zu Drehstrom-Sicherungseinheiten 30.1, 30.2 führen. Hinter den Sicherungseinheiten 30, die als Leitungsschutzschalter mit oder ohne Fehlerstrom-Schutzschalter ausgebildet sein können, ist das Drehstromsystem in drei Zweiphasen-Wechselstrom-Systeme mit dreiadrigen Leitungen 23 von beispielsweise 2,5 mm² Querschnitt aufgeteilt. An jeder Wechselstrom-Versorgungsleitung 23 sitzen dann wieder beispielsweise je fünf Doppelsteckdosen 3.1 ... 3.5, wobei die Längen der drei an dieselbe Sicherungseinheit 30.1, 30.2 angeschlossenen Leitungen 23 wie in Fig. 4 beschrieben gestaffelt sind. Alle Leitungen 20, 22, 23 sind als Rundkabel ausgeführt.

Dank der Verwendung der Drehstrom-Speiseleitung 20, die als Energiebus wirkt, kann an einer Steckdose hinter jeder Sicherungseinheit 30 ein zulässiger Strom von maximal 13,6 A abgenommen werden.

Fig. 2 zeigt eine weitere Verbesserung. Drehstrom-Speiseleitung 20, Speiseleitungsklemmeinheiten 21, Drehstrom-Stichleitungen 22 und Drehstrom-Sicherungseinheiten 30 entsprechen der Verdrahtung gemäß Fig. 1. In Weiterbildung dazu wird hinter den Sicherungseinheiten 30 jedoch eine Drehstrom-Versorgungsleitung 24 weitergeführt mit fünf Adern von beispielsweise 2,5 mm². Von dieser zweigen Stichleitungen 26 zu den einzelnen Elektro-lnstallationsgeräten 3.1, 3.2... 3.5 oder Verbrauchern ab. Die Kontaktierung zwischen Drehstrom-Versorgungsleitung 24 und Stichleitung 26 erfolgt über spezielle Versorgungsleitungsklemmeinheiten 25.1,... 25.5. Die Stichleitungen 23 können als Drehstrom- oder Wechselstromleitung ausgeführt werden, je nach dem Typ der Verbraucher bzw. Elektro-Installationsgeräte 3.

In Fig. 2 sind die Leitungen 20, 22, 26 beispielhaft als Rundkabel dargestellt, die Leitung 24 als Flachkabel.

Dank der dargestellten Verdrahtungsmethode kann jetzt an einer Steckdose 3.1, ... 3.5 ein zulässiger Strom von maximal 15,2 A abgenommen werden.

Fig. 3 zeigt ein Ausführungsbeispiel, bei dem die Drehstrom-Speiseleitung 20' mit fünf Adem von z. B. 10 mm² Querschnitt, die Drehstrom-Stichleitung 28 mit fünf Adern von z. B. 4 mm² Querschnitt und die Drehstrom-Versorgungsleitung 24 mit fünf Adern von z. B. 2,5 mm² Querschnitt als Flachkabel ausgeführt sind.

Der maximal zulässige Strom an einem Elektro-Installationsgerät 3 oder Verbraucher beträgt auch hier 15,2 A.

Es besteht die Möglichkeit, bei allen erfindungsgemäßen Verdrahtungen die Speiseleitungsklemmeinheiten 21, 27, die Sicherungseinheiten 30 und die diese verbindenden Drehstrom-Stichleitungen 22, 28 als Baueinheit zusammenzufassen. Des weiteren besteht die Möglichkeit, auch die Versorgungsleitungsklemmeinheiten 25, die Elektro-lnstallationsgeräte oder Verbraucher 3 und die sie verbindenden Stichleitungen 26 zu einer Baueinheit zusammenzufassen. Dadurch lassen sich die Montagezeiten noch weiter reduzieren, als es anhand der nachfolgenden Diagramme beschrieben wird.

Die Fig. 5, 6, und 7 zeigen, jeweils prozentual bezogen auf die in Fig. 4 dargestellte herkömmliche Verdrahtung in Kabelkanälen, die relativen Materialkosten, den relativen Zeitbedarf und den relativen maximal zulässigen Strom der Verdrahtungen nach den Fig. 1 bis 4, wobei jeweils gleiche Bestückungsdichte angenommen wurde.

Fig. 5 zeigt, daß der relative Materialaufwand von 100 % bei der Verdrahtung nach Fig. 4 ansteigt auf 111 % bei der Verdrahtung nach Fig. 1, auf 113,7% bei der Verdrahtung nach Fig. 2 und auf 116 % bei der Verdrahtung nach Fig. 3.

Fig. 6 zeigt, daß der relative Zeitbedarf von 100 % bei der Verdrahtung nach Fig. 4 abfällt auf 56 % bei der Verdrahtung nach Fig. 1, auf 29 % bei der Verdrahtung nach Fig. 2 und auf 25 % bei der Verdrahtung nach Fig. 3.

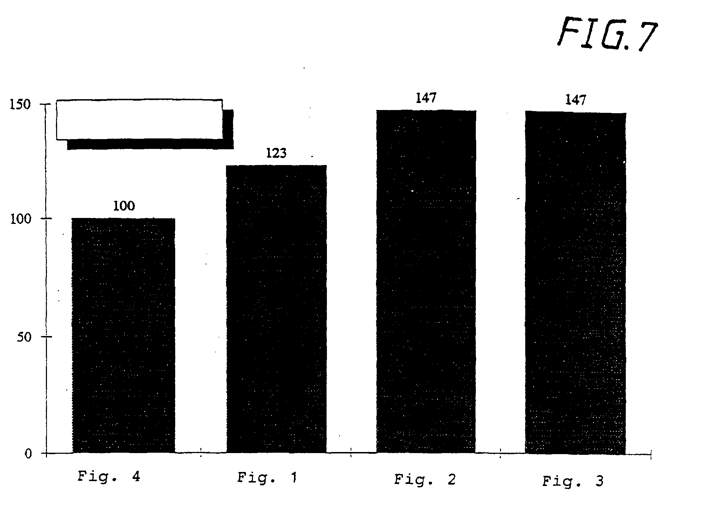

Fig. 7 zeigt, daß die maximal zulässige Stromentnahme an einem Verbraucher bzw. Elektro-Installationsgerät von 100 % bei der Verdrahtung nach Fig. 4 ansteigt auf 123 % bei der Verdrahtung nach Fig. 1 und auf 147 % bei den Verdrahtungen nach den Fig. 2 und 3.

Einem mäßigen Materialmehraufwand, der im wesentlichen bedingt ist durch die zusätzlichen Klemmeinheiten, steht somit eine drastische Reduzierung des Montagezeitaufwandes um 71 % und eine Erhöhung der maximal zulässigen Stromentnahme um 47 % gegenüber.

Insgesamt ergibt sich eine erhebliche Kostenreduzierung und gleichzeitig eine erhebliche Leistungssteigerung.

Schließlich wäre zu erwähnen, daß das erfindungsgemäße Verdrahtungssystem für Kabelkanäle sich besonders eignet für Gebäude, die mit einem Gebäudeleitsystem ausgerüstet sind, z. B. dem EIB-Bus. Die Steuerbusleitung kann in einer zweiten Kammer des Kabelkanals mitgeführt werden. Dieses weitere Anwendungsgebiet für das erfindungsgemäße Verdrahtungssystem stellt eine sinnvolle Ergänzung dieser neuen Installationstechnik dar.

## Patentansprüche

1. Verdrahtung in Kabelkanälen, umfassend
- eine Drehstrom-Speiseleitung (20, 20'),
-- verlegt im Kabelkanal (10),
- Speise-Stichleitungen (22, 28),
-- die Drehstrom-Stichleitungen sind,
-- die von der Drehstrom-Speiseleitung (20, 20') abzweigen,
- Sicherungseinheiten (30),
-- die Drehstrom-Sicherungseinheiten sind,
-- die an die Speise-Stichleitungen (22, 28) geschaltet sind,
-- die im Kabelkanal (10) positioniert sind,
wobei
- von jeder Sicherungseinheit (30) eine Drehstrom-Versorgungsleitung (24) abgeht,
- von jeder Drehstrom-Versorgungsleitung (24) Versorgungs-Stichleitungen (26) abzweigen,
- die Versorgungs-Stichleitungen (26) auf
-- Verbraucher oder Elektroinstallationsgeräte (3), z. B. Steckdosen, geschaltet sind,
--- die im Kabelkanal (10) positioniert sind.

2. Verdrahtung nach Anspruch 1, gekennzeichnet durch
- die Ausbildung von Drehstrom-Stichleitung (22, 28), Drehstrom-Versorgungsleitung (24) und/oder Versorgungs-Stichleitung (26) als Rundkabel, als Flachkabel oder als Stromschiene.

3. Verdrahtung nach Anspruch 1 oder 2, gekennzeichnet durch
- eine Speiseleitungsklemmeinheit (21, 27) zwischen Drehstrom-Speiseleitung (20, 20') und Drehstrom-Stichleitung (22, 28).

4. Verdrahtung nach einem der Ansprüche 1 bis 3, gekennzeichnet durch
- eine Versorgungsleitungsklemmeinheit (25) zwischen Drehstrom-Versorgungsleitung (24) und Stichleitung (26).

5. Verdrahtung nach Anspruch 3 oder 4, gekennzeichnet durch
- Ausbildung der Klemmeinheiten (21, 25, 27) als Flachkabel-Schnellklemmeinheit.

6. Verdrahtung nach Anspruch 3, gekennzeichnet durch
- einstückige Ausbildung von Speiseleitungsklemmeinheit (21, 27) Drehstrom-Stichleitung (22, 28) und Sicherungseinheit (30).

7. Verdrahtung nach Anspruch 4, gekennzeichnet durch
- einstückige Ausbildung von Versorgungsleitungsklemmeinheit (25), Stichleitung (26) und Verbraucher oder Elektro-Installationsgerät (3)

8. Verdrahtung nach einem der Ansprüche 1 bis 7, gekennzeichnet durch
- Ausbildung der Sicherungseinheit (30) als Drehstrom-Sicherungseinheit oder Wechselstrom-Sicherungseinheit, gegebenenfalls mit Fi-Schalter.

9. Verwendung einer Elektroverkabelung in Kabelkanälen (10), bestehend aus folgenden Merkmalen:
- einer Drehstrom-Speiseleitung (20, 20')
- Drehstrom-Stichleitungen (22, 28), die von der Drehstrom-Speiseleitung (20, 20') abzweigen,
- eine Sicherungseinheit (30) am Ende jeder Drehstrom-Stichleitungen (22, 28),
- ein Drehstrom-Versorgungsleitung (24) hinter jeden Sicherungseinheiten (30),
- Stichleitungen (26), die von jeder Drehstrom-Versorgungsleitung (24) abzweigen,
- und Verbrauchern oder Elektroinstallationsgeräten (3) am Ende der Stichleitungen (26).

## Claims

1. Wiring in cable ducts, comprising
- a three-phase feed line (20, 20'),
-- laid in the cable duct (10),
- branch feed lines (22, 28),
-- which are three-phase branch lines,
-- which branch off the three-phase feed line (20, 20'),
- safety units (30),
-- which are three-phase safety units,
-- which are connected to the branch feed lines (22, 28),
-- which are positioned in the cable duct (10),
wherein
- a three-phase supply line (24) extends from each safety unit (30),
- branch supply lines (26) branch off each three-phase supply line (24),
- the branch supply lines (26) are connected to
-- consuming devices or electrical installation appliances (3), e.g. sockets,
--- which are positioned in the cable duct (10).

2. Wiring according to claim 1, characterised by
- the construction of the three-phase branch line (22, 28), the three-phase supply line (24) and/or the branch supply line (26) as round cables, as flat cables or as bus-bars.

3. Wiring according to claim 1 or 2, characterised by
- a feed line clamping unit (21, 27) between the three-phase feed line (20, 20') and the three-phase branch line (22, 28).

4. Wiring according to one of claims 1 to 3, characterised by
- a supply line clamping unit (25) between the three-phase supply line (24) and the branch line (26).

5. Wiring according to claim 3 or 4, characterised by
- the construction of the clampinq units (21, 25, 27) as flat cable quick-action clamping units.

6. Wiring according to claim 3, characterised by
- a one-piece construction of the feed line clamping unit (21, 27), the three-phase branch line (22, 28) and the safety unit (30).

7. Wiring according to claim 4, characterised by
- a one-piece construction of the supply line clamping unit (25), the branch line (26) and the consuming device or electrical installation appliance (3).

8. Wiring according to one of claims 1 to 7, characterised by
- the construction of the safety unit (30) as a three-phase safety unit or an alternating-current safety unit, possibly with a fault-current circuit breaker.

9. Use of electrical cabling in cable ducts (10), consisting of the following features:
- a three-phase feed line (20, 20'),
- three-phase branch lines (22, 28) which branch off the three-phase feed line (20, 20'),
- a safety unit (30) at the end of each three-phase branch line (22, 28),
- a three-phase supply line (24) after each safety unit (30),
- branch lines (26) which branch off each three-phase supply line (24),
- and consuming devices or electrical installation appliances (3) at the end of the branch lines (26).

## Revendications

1. Câblage en conduits de câble, comprenant :
- une ligne d'alimentation en courant triphasé (20, 20') posée dans le conduit de câble (10),
- des lignes d'alimentation et de dérivation (22, 28) qui sont des lignes de dérivation de courant triphasé, qui partent de la ligne d'alimentation de courant triphasé (20, 20') ,
- des unités de sécurité (30) qui sont des unités de sécurité de courant triphasé, qui sont branchées sur les lignes d'alimentation et de dérivation (22, 28) et qui sont positionnées dans le conduit de câble (10),
- de chaque unité de sécurité (30) partant une ligne d'alimentation en courant triphasé (24) ,
- de chaque ligne d'alimentation (24) partant des lignes d'alimentation et de dérivation (26) ,
- les lignes d'alimentation et de dérivation (26) étant branchées sur des consommateurs ou des appareils d'installation électrique (3), par exemple des prises à enfichage, positionnés dans le conduit de câble (10).

2. Câblage selon la revendication 1, caractérisé par la réalisation d'une ligne de dérivation de courant triphasé (22, 28), d'une ligne d'alimentation en courant triphasé (24) et/ou une ligne d'alimentation et de dérivation (26) sous forme de câble rond, de câble plat ou de rail électrique.

3. Câblage selon la revendication 1 ou 2, caractérisé par une unité à bornes de ligne électrique (21, 27), entre la ligne d'alimentation en courant triphasé (20, 20') et la ligne de dérivation en courant triphasé (22, 28).

4. Câblage selon l'une des revendications 1 à 3, caractérisé par une unité à bornes de ligne d'alimentation (25) entre la ligne d'alimentation en courant triphasé (24) et la ligne de dérivation (26).

5. Câblage selon la revendication 3 ou 4, caractérisé par la réalisation des unités à bornes (21, 25, 27) sous forme d'unités à bornes rapides pour câble plat.

6. Câblage selon la revendication 3, caractérisé par la réalisation monopièce de l'unité à bornes de ligne d'alimentation (21, 27), de la ligne de dérivation en courant triphasé (22, 28) et de l'unité de sécurité (30).

7. Câblage selon la revendication 4, caractérisé par la réalisation monopièce de l'ensemble à bornes de ligne d'alimentation (25), de la ligne de dérivation (26) et du consommateur ou de l'appareil d'installation électrique (3).

8. Câblage selon l'une des revendications 1 à 7, caractérisé par la réalisation de l'unité de sécurité (30) sous forme d'unité de sécurité à courant triphasé ou d'unité de sécurité à courant variable, de préférence avec un interrupteur Fi.

9. Utilisation d'un câblage électrique dans des conduits à câbles (10), présentant les propriétés ci-après :
- une ligne d'alimentation en courant triphasé (20, 20'),
- des lignes de dérivation de courant triphasé (22, 28) partant de la ligne d'alimentation en courant triphasé (20, 20') ,
- une unité de sécurité (30) à l'extrémité de chacune des lignes de dérivation de courant triphasé (22, 28) ,
- une ligne d'alimentation en courant triphasé (24) derrière chacune des unités de sécurité (30) ,
- des lignes de dérivation (26) partant de chaque ligne d'alimentation en courant triphasé (24) ,
- et comprenant des consommateurs ou des appareils d'installation électrique (3) à l'extrémité des lignes de dérivation (26).
